# EUROPÄISCHE PATENTSCHRIFT

(11) **EP 3 625 032 B1**
(45) Veröffentlichungstag und Bekanntmachung des Hinweises auf die Patenterteilung: **16.06.2021**
(21) Anmeldenummer: 18719179.6
(22) Anmeldetag: 25.04.2018
(51) Int. Cl.: B29C 64/209, B29C 64/106, B33Y 30/00

(54) **EIN 3D-DRUCKKOPF ZUM EINSATZ IN EINEM 3D-DRUCKER, EIN 3D-DRUCKER MIT EINEM SOLCHEN 3D-DRUCKKOPF UND EIN VERFAHREN ZUM BETREIBEN EINES SOLCHEN 3D-DRUCKERS**
3D PRINTHEAD FOR USE IN A 3D PRINTER, 3D PRINTER WITH SUCH A 3D PRINTHEAD AND A METHOD FOR OPERATING SUCH A 3D PRINTER
TÊTE D'IMPRESSION 3D POUR L'UTILISATION DANS UNE IMPRIMANTE 3D, IMPRIMANTE 3D COMPRENANT UNE TELLE TÊTE D'IMPRESSION 3D ET PROCÉDÉ POUR LE FONCTIONNEMENT D'UNE TELLE IMPRIMANTE 3D

(30) Priorität: 16.05.2017 IT 201700052877
(43) Veröffentlichungstag der Anmeldung: 25.03.2020
(73) Patentinhaber: Starfort KG des Stubenruss Moritz, 39042 Bressanone (IT)
(72) Erfinder: STUBENRUSS, Moritz, 39042 Bressanone (IT)
(74) Vertreter: Schmidt, Steffen J.
(86) Internationale Anmeldenummer: PCT/EP2018/060569
(87) Internationale Veröffentlichungsnummer: WO 2018/210537

(56) Entgegenhaltungen:
- WO-A1-2016/020150
- WO-A2-97/19798

## Beschreibung

### Hintergrund

Hier werden ein 3D-Drucker, ein 3D-Druckkopf zum Einsatz in einem solchen 3D-Drucker, ein Verfahren zum Betreiben eines solchen 3D-Druckers, und ein mit einem solchen 3D-Drucker hergestelltes Druckerzeugnis offenbart. Dieser 3D-Drucker ist dazu eingerichtet, granularen, pulvrigen oder flüssigen Kunststoff oder Komponenten zwei- oder mehrteiliger Kunststoffsysteme (Thermoplaste, Epoxide, Acrylate, Polylactide, Acrylester-Styrol-Acrylnitril, Polymethylmethacrylat, Polyethylen (PE), Polyvinylchlorid (PVC), Polyethylenterephthalat (PET) oder Glykol-modifiziertes Polyethylenterephthalat (PETG), Polyethylennaphthalat (PEN), Acrylnitril-Butadien-Styrol-Copolymerisat (ABS), Polyvinylbutyral (PVB), Polymethylmethacrylat (PMMA), Polyamid (PA), Polyimid (PI), Polyvinylalkohol (PVA), Polystyrol (PS), Polyvinylphenol (PVP), Polypropylen (PP), Polycarbonat (PC) oder deren Derivate, etc.), aber auch niedrigschmelzende Metalle oder Metall-Legierungen als Druckmaterial zu verarbeiten. Es ist auch möglich, flüssige, auf Licht oder Wärme reagierende Kunststoffe mit dem hier offenbarten Druckkopf auszugeben und durch eine dem Drucckopf zugeordnete Licht- oder Wärmequelle sofort auszuhärten. In dem hier offenbarten 3D-Drucker können dem Druckmedium zur Beeinflusssung der Materialeigenschaften (Dichte [g/cm³], E-Modul [MPa], Bruchdehnung [%], Zugfestigkeit [MPa], Schmelzpunkt [°C], etc.) Zuschlagstoffe wie Partikel oder Fasern aus Textilmaterial, Glas, Kohle, Metall oder dergl. beigegeben werden. Details hierzu sind in den Ansprüchen definiert; aber auch die Beschreibung und die Zeichnung enthalten relevante Angaben zur Struktur und zur Funktionsweise sowie zu Varianten des Verfahrens und den Vorrichtungskomponenten.

### Stand der Technik

Die US 2012 0237631 A1 betrifft ein Schneckenzufuhrystem eines mit Granulat gespeisten 3-D Druckers. Wegen der schwierig zu regelnden Wärmeübertragung vom Druckerkopf auf das zugeführte Granulat kann dieses im Zufuhrkanal des Druckerkopfes oder in der Zufuhrschnecke ankleben, wodurch das Druckmaterial ungleichmäßig in den Druckerkopf hineingelangt und auch ungleichmäßig aus diesem austritt. Dies beeinträchtigt den Aufbau des Druckerzeugnisses, da die ausgebrachten Schichten unregelmäßige Schichtdicken oder ungewollte Unterbrechungen haben können.

Weiteren technologischen Hintergrund zeigen die US 5 656 230 A (Khoshevis) und die US 2002/113331 A1 (Zhang).

Die WO 2016 020150 A1 (Stubenruss) betrifft eine Granulatkörner-/ Flüssigkeitsflusseinstellvorrichtung für von Granulatkörnern und/oder Flüssigkeiten gespeiste 3D-Druckerköpfe. Dieses System liefert bei einem hohen Materialaustrag (Volumen des Druckmaterials pro Zeiteinheit) hochqualitative Druckerzeugnisse aus unterschiedlichen Materialien und Zuschlagstoffen mit sehr hoher Präzision und gleichmäßiger Schichtdicke. Dazu hat der dort offenbarte 3D-Druckerkopf eine Kammer mit einer (Boden-)Fläche, in der eine Austrittsöffnung vorgesehen ist. In der Kammer befindet sich eine Spiralförderschnecke, die das Druckmaterial der Austrittsöffnung zuführt. Ein Krafterzeuger drängt die Spiralförderschnecke in Richtung der Fläche, wobei der Abstand zwischen der Spiralförderschnecke und der Fläche durch den Druck des zuzuführenden Druckmaterials einstellbar ist.

Die relative Drehgeschwindigkeit zwischen der Fläche und der Spiralförderschnecke ist in Abhängigkeit von dem Druck des Druckmaterials einstellbar. Diese Anordnung leitet Granulatkörner oder Flüssigkeiten durch einen Zufuhrkanal in die Kammer mit der die Austrittsöffnung aufweisenden Platte. Durch die Austrittsöffnung kann aus dem Granulat oder den Flüssigkeiten erhaltenes, geschmolzenes oder flüssiges Druckmaterial austreten. Das Druckmaterial wird in Richtung der Kammer-Austrittsöffnung geleitet, oder das Druckmaterial wird wieder in eine von der Austrittsöffnung abgewandte Richtung durch Rotieren der Spiralförderschnecke relativ zu der Platte gebracht, wobei bei zu großem Druck des Druckmaterials sich die Spiralförderschnecke gegen die einwirkende axiale Kraft erhebt und die Wirksamkeit der Spiralförderschnecke abnimmt.

Bei der Verarbeitung von Druckmaterial in Form von Granulat oder von Pulver, aber auch bei Verwendung von Kunststoff-Flüssigkeiten kann sich in dem Material Gas in Form von dem Druckmaterial zugeführtem Schutzgas, chemischen Reaktionsgasen (zum Beispiel bei mehrkomponentigen Kunststoffsystemen), Luft, verdampfter Feuchtigkeit, etc. befinden. Dieses Gas kann die Gleichförmigkeit des ausgebrachten Druckmaterials und damit die Qualität des Druckerzeugnisses negativ beeinträchtigen.

Die WO97/19798 A2 (Stratasys) betrifft eine Vorrichtung zur Herstellung eines dreidimensionalen körperlichen Gegenstandes durch sequentielles, mustermäßiges Ablegen mehrerer Schichten eines verfestigbaren Materials auf einem Trägerelement. Diese Vorrichtung umfasst eine Düse zum Bereitstellen eines extrudierten Materials, eine Pumpe mit einem Einlass und einem Auslass, wobei der Auslass in Fluidverbindung mit der Düse steht und einen druckbeaufschlagten Strom des verfestigbaren Materials in flüssigem Zustand an die Düse bereitstellt. Ein mit der Pumpe verbundener Antrieb befähigt die Pumpe zum Bereitstellen einer variablen Druckbeaufschlagungshöhe und Fließrate des verfestigbaren Materials an die Düse. Eine Druckbeaufschlagungsstufe hat einem mit dem Einlass der Pumpe verbundenen Auslass zur Bereitstellung des verfestigbaren Materials an den Einlass in flüssigem Zustand und unter einem bestimmten Zwischendruck. Dieser Zwischendruck soll für alle funktionalen Druckbeaufschlagungshöhen und Fließraten der Pumpe sicherstellen, dass eine kontinuierliche Menge des verfestigbaren Materials an dem Einlass zum kontinuierlichen Betrieb der Pumpe zur Verfügung steht. So soll ein ununterbrochener Strom des verfestigbaren Materials zu der Düse und durch sie hindurch sichergestellt sein. Dabei wird das verfestigbare Material der Druckbeaufschlagungsstufe als Feststoff zugeführt. Die Druckbeaufschlagungsstufe hat eine Leitung zur Aufnahme des Feststoffs und zu dessen Erwärmung, um den Feststoff in den flüssigen Zustand des verfestigbaren Materials zu überführen. Ein Vortrieb bringt den Feststoff in die Leitung zur Druckbeaufschlagung auf den flüssigen Zustand des verfestigbaren Materials auf den bestimmten Zwischendruck.

Bei dieser Anordnung erfolgt die Druckbeaufschlagung in mindestens zwei Stufen, um unter anderem die Gasentwicklung zu kontrollieren. In der WO97/19798 A2 wurde erkannt, dass viele Extrusionsmaterialien während ihres Transports durch einen Extruder Gase freisetzen. Thermoplastische Polymere, die etwas hygroskopisch sind, setzen beim Erhitzen auf ihre Schmelztemperatur Wasserdampf frei. Andere freigesetzte Gase können Weichmacher, Monomere und Oxidationsprodukte sein. Gas im Druckteil des Extruders mindert die Druckagilität des Extruders. Deshalb wird bei der Anordnung der WO97/19798 A2 das Volumen an Extrusionsmaterial, welches auf den vollen Druck gebracht wird, möglichst klein gehalten.

Dazu wird der von dem Extruder ausgeführte Druckbeaufschlagungsprozess bei der WO97/19798 A2 in zwei oder mehr Stufen aufgeteilt. In der ersten Stufe des Extruders entwickeltes Gas wird bei einer Anordnung der WO97/19798 A2 noch bei dem relativ niedrigen Druck am Ausgang der ersten Stufe abgetrennt. In einer Variante wird von dem flüssigen Extrusionsmaterial in einem Vorwärmer entwickeltes Gas in einem Verbindungskanal von dem Extrusionsmaterial getrennt und entweicht über eine Drehdichtung am Eintritt zur zweiten Druckbeaufschlagungsstufe aus dem Extruder.

Als zweite Druckbeaufschlagungsstufe ist gemäß der WO97/19798 A2 eine konische Viskositätspumpe (siehe auch US-PS Nr. 5 312 224) vorgesehen. Hier wird flüssiges Extrusionsmaterial vom Verbindungskanal einem rotierenden Verdränger zugeführt, den ein drehzahlveränderlicher Motor in einer Hülse in Rotation versetzt, um das flüssige Extrusionsmaterial zu einer Düse und einer Öffnung hin und daraus heraus zu treiben. Die erste Stufe soll eine Unterfütterung oder Kavitation der Pumpe an ihrem Eintritt verhindern, wenn sie mit hochviskosen Extrusionsmaterialien eingesetzt wird. Andere zweite Stufen umfassen Zahnpumpen, Oszillationskolbenpumpen, Drehschieberpumpen, Ein- und Zweischraubenpumpen etc.

Gemäß der WO97/19798 A2 sollen typische Extrusionsmaterial-Depositionsraten in zwischen 0,1 und 10 in³ (1,64 cm³ bis 164 cm³) pro Stunde angesiedelt sein.

### Zugrundeliegende Aufgabe

Ein 3D-Druckerkopf soll auch Druckmaterial mit unterschiedlicher Qualität, schwankendem Feuchtigkeitsgehalt, Gasanteil oder dergl. zu Druckerzeugnissen mit gleichbleibend hoher Qualität verarbeiten können.

### Vorgestellte Lösung

Dazu ist der 3D-Druckerkopf mit einer Förderschnecke der hier offenbarten und im Patentanspruch 1 definierten Funktion und Gestalt ausgestattet.

### Ausgestaltungen und Varianten

Insbesondere hat der 3D-Druckerkopf eine Kammer, die dazu eingerichtet ist, durch einen Einlass flüssiges oder festes Druckmaterial zu erhalten, wobei die Kammer an einer Fläche eine Austrittsöffnung aufweist, und der Kammer eine Spiralförderschnecke zugeordnet ist, die dazu eingerichtet ist, aus dem Einlass in die Kammer gelangendes Druckmaterial der Austrittsöffnung zuzuführen, indem die Spiralförderschnecke mit einem Antrieb zu koppeln ist, der dazu eingerichtet ist, die Spiralförderschnecke in einer Förderrichtung der Spiralförderschnecke in einem Abstand von der Fläche und relativ zu dieser zu drehen, wobei die Spiralförderschnecke wenigstens eine Förderbahn aufweist, die dazu eingerichtet ist, Druckmaterial zwischen einem radial außen liegenden Einlassbereich und einem radial innen liegenden Auslassbereich zu diesem hin zu fördern, und wenigstens eine Abförderbahn aufweist, die dazu eingerichtet ist, Druckmaterial mit darin befindlichem Gas zumindest von einem Abschnitt einer radial inneren Randzone der Förderbahn weg zu fördern.

Dem hier vorgestellten 3D-Druckerkopf liegt die Erkenntnis zugrunde, dass in die Kammer des 3D-Druckerkopfes eingespeistes Material Gas enthalten kann, oder aufgrund von Erwärmung oder chemischer Reaktionen Gas bilden kann. Dieses Gas kann, bevor es aus der Austrittsöffnung der Kammer austritt, in die Förderschnecke gelangen und sich dort, eingegrenzt durch Wandungen der Förderschnecke, sammeln. Diese Gaseinschlüsse können sich in dem in der Förderschnecke befindlichen Druckmaterial zu einer oder mehreren größeren Gasblasen vereinen. Der Volumenstrom des Druckmaterials aus der Förderschnecke heraus durch die Kammer-Austrittsöffnung ist während des 3D-Druckvorgangs relativ gering. Wenn nun eine solche in dem Druckmaterial befindliche Gasblase mit dem Druckmaterial in den Bereich vor die Kammer-Austrittsöffnung gelangt, beeinträchtigt diese Gasblase die Zufuhr von Druckmaterial zu der Kammer-Austrittsöffnung. Der Druckvorgang ist gestört, da weniger als sonst oder gar kein Druckmaterial durch die Austrittsöffnung ausgebracht wird, während sich die Gasblase im Bereich der Kammer-Austrittsöffnung befindet. Um diesem Umstand möglichst effektiv entgegenzuwirken, trägt die hier vorgestellte Ausgestaltung der Förderschnecke dazu bei, dass diese wegen der abgeleiteten Gaseinschlüsse möglichst wenig ihrer Förderleistung verliert. Dem liegt die Erkenntnis zugrunde, dass an Stellen, an denen sich in der Förderbahn eine Gasblase befindet, die Förderschnecke keinen oder kaum mehr Schub in Richtung der Kammer-Austrittsöffnung erzeugen kann. Dadurch wäre der Materialfluss des Druckmaterial aus der Kammer-Austrittsöffnung beeinträchtigt und könnte im Extremfall vollständig zum Erliegen kommen. Dabei käme es durch die Gaseinschlüsse zu einem so großen Druckabfall, dass die Förderschnecke nicht oder kaum mehr von der Kammer-Fläche mit der Austrittsöffnung abhebt. Im ungünstigsten Fall tritt kein oder kaum noch Material aus der der Kammer-Austrittsöffnung aus. Die Steuerung des 3D-Druckerkopfes kann diese Störung nur sehr schwer rechtzeitig erkennen oder darauf reagieren. Das Druckerzeugnis kann so eine Fehlerstelle erhalten und unbrauchbar sein.

Mit der hier offenbarten Anordnung des 3D-Druckerkopfes ist es möglich, die Spiralförderschnecke und die Kammer so relativ zueinander zu rotieren, dass in dem Druckmaterial befindliche Gaseinschlüsse zumindest von der radial inneren Randzone der Förderbahn durch die Abförderbahn wegfördert werden, bevor solche Gaseinschlüsse in das Innere des Auslassbereiches gelangen. So fördert die Spiralförderschnecke (überwiegend annähernd) gasfreies Druckmaterial in das Innere des Auslassbereiches und von dort zu der Kammer-Austrittsöffnung. Unterbrechungen im Materialfluss aus der Kammer-Austrittsöffnung sind somit wirksam verringert oder verhindert.

Die Spiralförderschnecke hat in einer Variante der hier offenbarten Anordnung des 3D-Druckerkopfes eine annähernd kreisrunde, der Fläche der Kammer mit der Austrittsöffnung zugewandte Stirnseite. Alternativ oder zusätzlich hat die Stirnseite ein Zentrum, das in etwa mit der Austrittsöffnung in der Fläche der Kammer fluchtet. Alternativ oder zusätzlich ist die Stirnseite der Spiralförderschnecke zu der Fläche der Kammer etwa parallel (mit einem Kippwinkel von bis zu 30°) angeordnet und so orientiert, dass der radial innen liegende Auslassbereich der Spiralförderschnecke im Abstand zu der Austrittsöffnung und nahe dieser rotiert.

Die Spiralförderschnecke hat in einer Variante der hier offenbarten Anordnung des 3D-Druckerkopfes einen radial außen liegenden Einlassbereich in die Förderbahn, der durch einen seitlichen, in einer stirnseitigen Draufsicht etwa kreissektorförmigen Ausschnitt gebildet ist. Alternativ oder zusätzlich hat auf der von dem Einlass der Förderbahn abliegenden Seite des Einlassbereiches die Spiralförderschnecke eine die Förderbahn und/oder die Abförderbahn begrenzende endseitige Wand, deren außen liegendes Ende ihrem innen liegenden Ende in einer stirnseitigen Draufsicht in Drehrichtung der Spiralförderschnecke (relativ zur Kammer) voran eilt. Alternativ oder zusätzlich lenkt diese Wand in der Förderbahn geführtes Druckmaterial zu dem im Zentrum der Spiralförderschnecke befindlichen Auslassbereich hin. Alternativ oder zusätzlich erstreckt sich diese Wand so weit, dass sie die Abförderbahn nach innen überragt. Alternativ oder zusätzlich lenkt diese Wand das Druckmaterial auch quer zu der Abförderbahn unter dieser hindurch und/oder in diese hinein.

Die Spiralförderschnecke hat in einer Variante der hier offenbarten Anordnung des 3D-Druckerkopfes einen Auslassbereich, der eine zumindest annähernd koaxial zur Mittellängsachse der Spiralförderschnecke ausgerichtete, ihn umgebende Ringwand. Die Ringwand hat einen Durchbruch an einer Stelle, an der die Wand von der Förderbahn an den Auslassbereich hinreicht. Alternativ oder zusätzlich ist der Durchbruch dazu eingerichtet, Druckmaterial von der Förderbahn, die Abförderbahn passierend, durch den Durchbruch zu dem im Zentrum der Spiralförderschnecke befindlichen Auslassbereich gelangen zu lassen.

Die Spiralförderschnecke hat in einer Variante der hier offenbarten Anordnung des 3D-Druckerkopfes an ihrem Umfang einen zumindest annähernd koaxial zur Rotationsachse ausgerichteten Bund aufweist, der die Förderbahn radial nach außen begrenzt. Alternativ oder zusätzlich hat der Bund einen freien, unteren Rand, welcher die Stirnseite der Spiralförderschnecke hin zu der Fläche der Kammer mit der Austrittsöffnung begrenzt. Alternativ oder zusätzlich hat die Förderbahn eine sich zumindest teilweise um die Mittellängsachse der Spiralförderschnecke herum erstreckende Dachfläche aufweist. Alternativ oder zusätzlich begrenzt die Dachfläche der Förderbahn diese auf ihrer von der Fläche der Kammer abliegenden Seite. Alternativ oder zusätzlich ist die Förderbahn zur Fläche der Kammer hin zumindest teilweise offen. Alternativ oder zusätzlich ist die Dachfläche der Förderbahn zur Rotationsachse der Spiralförderschnecke in einem Winkel von 90° plus/minus bis zu 25° orientiert.

Die Spiralförderschnecke hat in einer Variante der hier offenbarten Anordnung des 3D-Druckerkopfes eine Abförderbahn, deren Dachfläche einen größeren Abstand von der Stirnseite der Spiralförderschnecke hat als die Dachfläche der Förderbahn. Damit wird ein Abfließen von Druckmaterial mit eingeschlossenem Gas weg von dem Auslassbereich erleichtert. Alternativ oder zusätzlich ist zumindest ein Abschnitt der Abförderbahn radial weiter innen liegend angeordnet als ein Abschnitt der Förderbahn. Alternativ oder zusätzlich sind die Abförderbahn einerseits und der Auslassbereich andererseits so dimensioniert und gestaltet, dass die Abförderbahn dem Druckmaterial einen ersten Strömungswiderstand bietet, und der Auslassbereich bietet dem Druckmaterial einen zweiten Strömungswiderstand, wobei der erste Strömungswiderstand geringer ist als der zweite Strömungswiderstand. Dabei ist der zweite Strömungswiderstand des Auslassbereichs so klein bemessen, dass bei einer relativen Rotation der Spiralförderschnecke zu der Kammer ausreichend Druckmaterial in den Auslassbereich hin zu der Austrittsöffnung strömt.

Die Spiralförderschnecke hat in einer Variante der hier offenbarten Anordnung des 3D-Druckerkopfes zumindest einen Abschnitt der Förderbahn, der die Abförderbahn zumindest teilweise in Umfangsrichtung der Spiralförderschnecke umgibt. Alternativ oder zusätzlich umgibt die Abförderbahn den im Zentrum der Spiralförderschnecke befindlichen Auslassbereich. Alternativ oder zusätzlich reicht die Abförderbahn bis zum Einlass der Förderbahn oder darüber hinaus, um Druckmaterial und eingeschlossenes Gas aus der Abförderbahn weg zu fördern. Alternativ oder zusätzlich hat die Abförderbahn entlang ihrer Erstreckung in ihrer Dachfläche zumindest eine Öffnung, die dazu eingerichtet ist, Druckmaterial und eingeschlossenes Gas aus der Abförderbahn entweichen zu lassen.

Alternativ oder zusätzlich ist zumindest ein Abschnitt der Abförderbahn radial weiter innen liegend angeordnet als ein Abschnitt der Förderbahn. Damit kann erreicht werden, dass zumindest der Abschnitt der Förderbahn mehr Druckmaterial fördert als der Abschnitt der Abförderbahn. Damit fließt Druckmaterial von dem Abschnitt der Förderbahn in Richtung des Auslassbereiches.

Alternativ oder zusätzlich umgibt zumindest ein Abschnitt der Förderbahn die Abförderbahn zumindest teilweise in Umfangsrichtung der Spiralförderschnecke. In einer Variante umgibt die Abförderbahn den im Zentrum der Spiralförderschnecke befindlichen Auslassbereich. Außerdem kann die Abförderbahn bis zum Einlass der Förderbahn reichen um Druckmaterial und eingeschlossenes Gas aus der Abförderbahn weg zu fördern. Entlang ihrer Erstreckung kann die Abförderbahn in ihrer Dachfläche zumindest eine Öffnung aufweisen, durch welche Druckmaterial und eingeschlossenes Gas aus der Abförderbahn entweichen kann.

Als weitere Lösung des oben genannten Problems wird ein 3D-Drucker vorgeschlagen, umfassend einen 3D-Druckerkopf mit einem oder mehreren der vorhergehenden Merkmale, der relativ zu einer Aufnahme für ein Druckerzeugnis entlang wenigstens einer geometrischen Achse zu bewegen ist, wobei dem 3D-Drucker eine Steuerung zugeordnet ist, die dazu eingerichtet ist, mittels wenigstens einem Achsantrieb den 3D-Druckerkopf relativ zu der Aufnahme zu bewegen. Alternativ oder zusätzlich ist ein Antrieb für die Spiralförderschnecke relativ zu der Kammer vorgesehen um Druckmaterial aus der Austrittsöffnung kontrolliert auf die Aufnahme auszubringen.

Als weitere Lösung des oben genannten Problems wird ein Verfahren zum Betreiben eines 3D-Druckers mit einem 3D-Druckerkopf nach einem der Ansprüche bis 10 vorgeschlagen, mit folgenden Schritten:
- Bereitstellen einer Kammer, die an einer Fläche eine Austrittsöffnung aufweist,
- Zuordnen einer Spiralförderschnecke zu der Kammer,
- Versehen der Spiralförderschnecke mit wenigstens einer Förderbahn und wenigstens einer Abförderbahn,
- Beschicken einer Kammer mit flüssigem oder festem Druckmaterial,
- Hervorrufen einer relativen Rotation der Spiralförderschnecke zu der Kammer um eine Mittellängsachse der Spiralförderschnecke, wobei sich eine Stirnseite der Spiralförderschnecke in einem Abstand von der Fläche der Kammer befindet,
- Fördern von Druckmaterial zwischen einem radial außen liegenden Einlassbereich und einem radial innen liegenden Auslassbereich mittels der Förderbahn, und
- Fördern von Druckmaterial mit darin befindlichem Gas weg von zumindest von einem Abschnitt einer radial äußeren Randzone des Auslassbereiches.

Diese Verfahrensweise vermindert die Gefahr oder schließt aus, dass eine in dem Druckmaterial befindliche Gasblase mit dem Druckmaterial in den Bereich vor die Kammer-Austrittsöffnung gelangt und den Druckvorgang stört. In einem solchen Störfall würde weniger als sonst oder gar kein Druckmaterial durch die Austrittsöffnung ausgebracht. So trägt die Ausgestaltung der Förderschnecke dazu bei, dass diese durch das wirksame Ableiten von Gaseinschlüssen möglichst wenig ihrer Förderleistung verliert.

Alternativ oder zusätzlich wird die relative Rotation der Spiralförderschnecke zu der Kammer so hervorgerufen, dass sie in dem Druckmaterial befindliche Gaseinschlüsse zumindest von der radial äußeren Randzone des Auslassbereiches in die Abförderbahn wegfördert, bevor solche Gaseinschlüsse in das Innere des Auslassbereiches gelangen. So fördert die Spiralförderschnecke überwiegend zumindest annähernd gasfreies Druckmaterial in das Innere des Auslassbereiches und von dort zu der Kammer-Austrittsöffnung.

Als weitere Lösung des oben genannten Problems wird ein 3D-Druckerzeugnis vorgeschlagen, erhältlich mittels eines 3D-Druckers aufweisend einen 3D-Druckerkopf mit einem oder mehreren vorhergehenden Vorrichtungsaspekte und/oder mittels eines Verfahrens mit einem oder mehreren der vorhergehenden Verfahrensaspekte.

Ein solches, mittels eines 3D-Druckers aufweisend einen 3D-Druckerkopf mit einem oder mehreren vorhergehenden Vorrichtungsaspekte und/oder mittels eines Verfahrens mit einem oder mehreren der vorhergehenden Verfahrensaspekte hergestelltes Druckerzeugnis oder Bauteil ist von einem herkömmlich erzeugten Druckerzeugnis oder Bauteil klar unterscheidbar. Durch das Verringern / Verhindern von Gasaustrag aus der Kammer-Austrittsöffnung weist das hier erhaltene Druckerzeugnis erheblich weniger oder gar keine (relevanten) Gaseinschlüsse auf als ein in herkömmlicher Weise hergestelltes Druckerzeugnis.

In einem herkömmlich hergestellten Druckerzeugnis oder Bauteil ist zum Beispiel in einem Schnitt durch das Bauteil ein Gaseinschluss zwischen einzelnen Schichten des Druckmaterials deutlich zu erkennen. Auch Lücken im Verlauf einer Schicht des Druckmaterials sind bei einem herkömmlich erzeugten Druckerzeugnis oder Bauteil deutlich zu erkennen. Ein Gasaustrag aus der Kammer-Austrittsöffnung ist am erhaltenen Druckerzeugnis ebenfalls unmittelbar erkennbar. Ein solcher Gasaustrag aus der Kammer-Austrittsöffnung in das Druckerzeugnis führt entweder zu einer Einbuchtung / Senkung an Oberfläche des Druckerzeugnisses, oder der Gasaustrag führt im Inneren des Druckerzeugnisses als Materialfehler zu einer offenen oder geschlossenen Gastasche. Letzlich hat dieser Gasaustrag eine zum Teil erhebliche Minderung der Festigkeit des fertigen Druckerzeugnisses zur Folge.

Diese Minderung der Festigkeit kann zum Beispiel auch durch eine zerstörungsfreie Werkstoffprüfung, wie eine Ultraschallprüfung, nachgewiesen werden. Eine nachträgliche Beseitigung solcher nachgewiesen Fehlstellen ist bei einem fertigen Druckerzeugnis nur mit erheblichem Aufwand möglich.

Es sei bemerkt, dass obwohl hier numerische Bereiche und numerische Werte offenbart sind, dass alle numerischen Werte zwischen den offenbarten Werten und jedem numerischen Unterbereich innerhalb der genannten Bereiche als ebenfalls offenbart anzusehen sind. Es sei ferner darauf hingewiesen, dass während eine Zahl für ein Verhältnis zwischen den verschiedenen Abmessungen der hier beschriebenen Komponenten angegeben ist, dass jede spezielle Komponenten der hier beschriebenen Art nicht notwendigerweise jedes und alle Verhältnisse zwischen den verschiedenen hier angegebenen Abmessungen verwirklichen muss.

### Kurzbeschreibung der Zeichnung

Weitere Ziele, Merkmale, Vorteile und Anwendungsmöglichkeiten ergeben sich aus der nachfolgenden Beschreibung einiger Ausführungsbeispiele und zugehöriger Zeichnungen. Dabei bilden alle beschriebenen und/oder bildlich dargestellten Merkmale für sich oder in beliebiger Kombination den hier offenbarten Gegenstand, auch unabhängig von ihrer Gruppierung in den Ansprüchen oder deren Rückbeziehungen.
Fig. 1 veranschaulicht eine schematische seitliche Schnittansicht durch einen 3D-Druckerkopf, der die hier vorgestellte Lösung verkörpert.
Fig. 2 veranschaulicht eine schematische Draufsicht in Richtung der Pfeile A in Fig. 1 auf eine Stirnseite einer Spiralförderschnecke.
Fig. 3 veranschaulicht eine schematische Ansicht eines 3D-Druckers mit einem 3D-Druckerkopf, der die hier vorgestellte Lösung verkörpert.
Fig. 4 zeigt eine Photographie eines Auschnitts aus einem Druckerzeugnis, das mit einem herkömmlichen Druck-Verfahren hergestellt ist.
Fig. 5 zeigt eine Photographie eines Auschnitts aus einem Druckerzeugnis, das mit dem hier vorgestellten 3D-Druckerkopf, gemäß dem hier vorgestellten Druck-Verfahren hergestellt ist.

### Detaillierte Beschreibung der Zeichnung

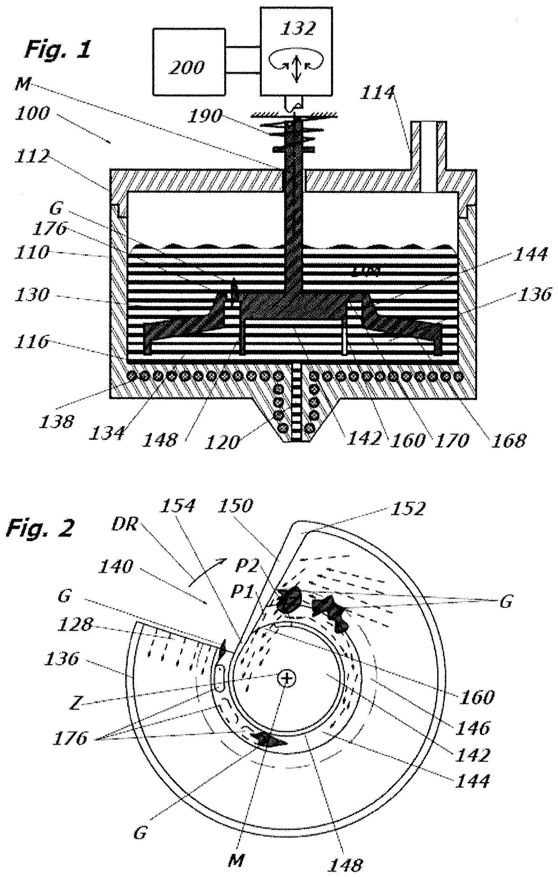

Ein in Fig. 1 veranschaulichter 3D-Druckerkopf 100 hat eine topfförmige Kammer 110, die mit einem Deckel 112 zu verschließen ist. Der Deckel 112 hat einen Einlass 114 um flüssiges oder festes Druckmaterial DM der Kammer 110 zuführen zu können. Als Druckmaterial DM für den Druckerkopf 100 können granulärer, pulvriger oder flüssiger Kunststoff oder Komponenten zwei- oder mehrteiliger Kunststoffsysteme, aber auch niedrigschmelzende Metalle oder Metall-Legierungen eingesetzt werden. Die topfförmige Kammer 110 und der Deckel 112 sind in der veranschaulichten Variante aus Stahl. Es sind aber auch andere Materialien verwendbar. Die Kammer 110 hat an einer Fläche 116 (in Fig. 1 ihrer Bodenfläche) eine als Düse gestaltete Austrittsöffnung 120 für das Druckmaterial DM. Im Innern der Kammer 110 ist eine Spiralförderschnecke 130 angeordnet. Diese Spiralförderschnecke 130 dient dazu, durch den Einlass 114 in die Kammer 110 gelangendes Druckmaterial DM der Austrittsöffnung 120 zuzuführen. Dazu ist in der veranschaulichten Variante die Spiralförderschnecke 130 mit einem Antrieb 132 gekoppelt. Der Antrieb 132 ist - mittels einer (elektronischen) Steuerung 200 - dazu eingerichtet, die Spiralförderschnecke 130 relativ zu der Kammer 110 so zu drehen, dass sich die Spiralförderschnecke 130, genauer gesagt ihre untere Stirnseite 134 in Fig. 1, in einem Abstand von der Fläche 116 der Kammer 110 dreht. Dieser Abstand beträgt abhängig von der Art des Druckmaterials DM, dessen Viskosität und dessen etwaigen Zuschlagstoffen (Partikel oder Fasern aus Textilmaterial, Glas, Kohle, Metall oder dergl.) nur wenige 100 µm bis wenige (etwa 2 - 5) mm. Um das Druckmaterial DM zu schmelzen und seine Viskosität zu beeinflussen, sofern es als Granulat oder Pulver in die Kammer 110 eingebracht wird, dient eine im Boden der Kammer 110 befindliche Heizwendel 138, deren Heizleistung ebenfalls durch die Steuerung 200 geregelt wird. Hierzu wird in nicht weiter detaillierter Weise die Temperatur des Druckmaterial DM in der Kammer erfasst und der Steuerung 200 signalisiert.

Die Spiralförderschnecke 130 hat wenigstens eine Förderbahn 136 um flüssiges / verflüssigtes Druckmaterial DM zwischen einem radial außen liegenden Einlassbereich 140 und einem radial innen liegenden Auslassbereich 142 zu letzterem hin zu fördern, wenn der Antrieb 132 die Spiralförderschnecke 130 relativ zu der Kammer 110 um die Mittellängsachse M der Spiralförderschnecke 130 dreht. Des Weiteren hat die Spiralförderschnecke 130 eine Abförderbahn 144, die Druckmaterial DM mit darin befindlichem Gas G von einer radial inneren Randzone 146 der Förderbahn 136 weg fördert, wenn der Antrieb 132 die Spiralförderschnecke 130 relativ zu der Kammer 110 um die Mittellängsachse M der Spiralförderschnecke 130 dreht.

So werden im Druckmaterial DM befindliche Gaseinschlüsse G zumindest von der radial inneren Randzone 146 der Förderbahn 136 durch die Abförderbahn 144 wegfördert, bevor solche Gaseinschlüsse G in das Innere des Auslassbereiches 142 gelangen. So fördert die Spiralförderschnecke 130 überwiegend annähernd gasfreies Druckmaterial DM in das Innere des Auslassbereiches 142 und von dort zu der Kammer-Austrittsöffnung 120.

Wie veranschaulicht, hat die Spiralförderschnecke 130 eine annähernd kreisrunde, der Fläche 116 der Kammer 110 mit der Austrittsöffnung 120 zugewandte Stirnseite 134. Die Stirnseite 134 hat ein Zentrum Z, das in etwa mit der Austrittsöffnung 120 in der Fläche 116 der Kammer 110 fluchtet. Die Stirnseite 134 der Spiralförderschnecke 130 ist zu der Fläche 116 der Kammer 110 etwa parallel angeordnet. Der radial innen liegende Auslassbereich 142 der Spiralförderschnecke 130 rotiert im Abstand zu der Austrittsöffnung 120 der Kammer 110, wobei das Zentrum Z der Stirnseite 134 und die Austrittsöffnung 120 der Kammer 110 zueinander fluchten.

Der Förderbahn 136 ist der Einlassbereich 140 in die Förderbahn 136 vorgelagert. Dieser Einlassbereich 140 ist durch einen seitlichen, in einer stirnseitigen Draufsicht etwa kreissektorförmigen Ausschnitt gebildet (siehe Fig. 2). Auf der von dem Eingang 128 der Förderbahn 136 abliegenden Seite des Einlassbereiches 140 hat die Spiralförderschnecke 130 eine die Förderbahn 136 und die Abförderbahn 144 begrenzende endseitig Wand 150. Das außen liegende Ende 152 der Wand 150 eilt dem innen liegenden Ende 154 der Wand 150 in einer stirnseitigen Draufsicht in Drehrichtung DR der Spiralförderschnecke 130 voran. Diese Wand 150 lenkt in der Förderbahn 136 geführtes Druckmaterial DM auf einer spiralabschnittsförmigen Bahn zu dem im Zentrum Z der Spiralförderschnecke 130 befindlichen Auslassbereich 142 hin. Diese Wand 150 erstreckt sich so weit, dass sie die Abförderbahn 144 zum Zentrum Z hin nach innen überragt. Die Wand 150 lenkt das Druckmaterial DM auch quer zu der Abförderbahn 144 unter dieser hindurch und in diese hinein, wie dies mit den Pfeilen P1 bzw. P2 veranschaulicht ist.

Der radial innen liegende Auslassbereich 142 der Spiralförderschnecke 130 ist von einer ihn umgebenden, zumindest annähernd koaxial zur Mittellängsachse M der Spiralförderschnecke 130 ausgerichteten Ringwand 148 begrenzt. Die Ringwand 148 hat einen Durchbruch 160 an einer Stelle, an der die Wand 150 von der Förderbahn 136 an den Auslassbereich 142 hinreicht. So kann Druckmaterial DM von der Förderbahn 136, die Abförderbahn 144 passierend, durch den Durchbruch 160 zu dem im Zentrum der Spiralförderschnecke 130 befindlichen Auslassbereich 142 gelangen, wenn sich die Spiralförderschnecke 130 relativ zu der Kammer 110 in der Drehrichtung DR dreht.

An ihrer der Austrittsöffnung 120 zugewandten Stirnseite 134 hat die Spiralförderschnecke 130 entlang ihres Umfangs einen zumindest annähernd koaxial zur Mittellängsachse M ausgerichteten Bund 164, der die Förderbahn 136 radial nach außen begrenzt. Wie in Fig. 1 veranschaulicht, reichen der Bund 164, die Ringwand 148 und die Wand 150 an der Stirnseite 134 der Spiralförderschnecke 130 in etwa gleich weit in Richtung der Fläche 116 der Kammer 110. Dazu hat der Bund 164 einen freien, unteren Rand 166, welcher die Stirnseite 134 der Spiralförderschnecke 130 hin zu der Fläche 116 der Kammer 110 mit der Austrittsöffnung 120 begrenzt.

Des Weiteren hat die Förderbahn 136 eine sich zumindest teilweise um die Mittellängsachse M herum erstreckende Dachfläche 168. Diese Dachfläche 168 der Förderbahn 136 begrenzt die Förderbahn 136 auf ihrer von der Fläche 116 der Kammer 110 abliegenden Seite. Auf ihrer der Fläche 116 der Kammer 110 zugewandten Seite ist die Förderbahn 136 zur Fläche 116 der Kammer 110 hin offen. Die Dachfläche 168 der Förderbahn 136 ist zur Mittellängsachse M der Spiralförderschnecke 130 in einem Winkel von etwa 120° kegelabschnittsförmig zum Zentrum hin ansteigend gestaltet. In einer anderen Variante ist die Dachfläche 168 der Förderbahn 136 etwa 90° zur Mittellängsachse M der Spiralförderschnecke 130 orientiert. Die Dachfläche 168 kann auch eine zur Mittellängsachse M der Spiralförderschnecke 130 hin progressiv ansteigende Form haben.

Die Abförderbahn 144 hat eine Dachfläche 170 mit einem größeren Abstand von der Stirnseite 134 der Spiralförderschnecke 130 als die Dachfläche 168 der Förderbahn 136. Überdies ist die Abförderbahn 144 in der der Spiralförderschnecke 130 radial weiter innen liegend angeordnet als die Förderbahn 136. Die Abförderbahn 144 einerseits und der Auslassbereich 142 andererseits sind so dimensioniert und gestaltet, dass die Abförderbahn 144 dem Druckmaterial DM einen kleineren Strömungswiderstand bietet als der Auslassbereich 142. Dabei ist der Strömungswiderstand des Auslassbereichs 142 auch durch die Abmessungen des Durchbruchs 160 bestimmt und so klein bemessen, dass bei einer relativen Rotation der Spiralförderschnecke 130 zu der Kammer 110 ausreichend Druckmaterial DM in den Auslassbereich 142 hin zu der Austrittsöffnung 120 strömt. Wenn der Druck in dem Druckmaterial DM zwischen der Spiralförderschnecke 130 und der Fläche 116 der Kammer 110 zu groß wird, und daher zu viel Druckmaterial DM über die Austrittsöffnung 120 ausgestoßen würde, hebt sich die Spiralförderschnecke 130 gegen die Belastung einer Feder 190 von der Fläche 116 der Kammer 110 weg.

Die Förderbahn 136 hat eine kreisringabschnittsförmige Gestalt und umgibt die ebenfalls kreisringabschnittsförmige Abförderbahn 144 in Umfangsrichtung der Spiralförderschnecke 130. Die Abförderbahn 144 umgibt das etwa kreisförmige Zentrum der Spiralförderschnecke 130 mit dem dort befindlichen Auslassbereich 142. Die Abförderbahn 144 reicht in der gezeigten Variante von dem Durchbruch 160 bis zum Eingang 128 der Förderbahn 136, wo sie in den Einlassbereich mündet um Druckmaterial DM und eingeschlossenes Gas G aus der radial inneren Randzone 146 der Förderbahn 136 durch die Abförderbahn 144 weg zu fördern. Dabei strömt das Druckmaterial DM und mit darin eingeschlossenem Gas G in zur Strömungsrichtung des Druckmaterials DM in der Förderbahn 136 entgegengesetzter Richtung. Die Abförderbahn 144 hat in der ebenfalls veranschaulichten Variante entlang ihrer Erstreckung in ihrer Dachfläche 170 mehrere Öffnungen 176, durch die Druckmaterial DM und darin eingeschlossenes Gas G aus der Abförderbahn 144 entweichen kann. So wird wirksam verhindert, dass Druckmaterial DM mit darin eingeschlossenem Gas G in den Auslassbereich 142 und zu der Austrittsöffnung 120 gelangen kann.

Bei dem 3D-Druckkopf 100 tritt im Druckbetrieb nur eine geringe Menge an Druckmaterial DM aus der Austrittsöffnung 120 aus. In die Förderbahn 136 der Spiralförderschnecke 130 gelangt mit dem Druckmaterial DM auch Gas G in Gestalt von Luft, in den 3D-Druckkopf 100 eingebrachtes Inertgas, aus dem Druckmaterial DM austretender Wasserdampf, Weichmacher, Monomere und Oxidationsprodukte. In die Förderbahn 136 der Spiralförderschnecke 130 wird eine größere Menge an Druckmaterial DM eingenommen, als aus der Austrittsöffnung 120 austritt. Die hier vorgestellte Anordnung der Abförderbahn 144 erlaubt einerseits, zumindest einen Teil der überschüssigen Menge an Druckmaterial DM wieder abzuführen, bevor es in den Auslassbereich 142 gelangt. Ein weiterer Teil der überschüssigen Menge an Druckmaterial DM kann - wenn die Spiralförderschnecke 130 von der Fläche 116 der Kammer 110 kontrolliert abhebt - aus der Förderbahn 136 radial nach außen entweichen. Durch die hier vorgestellte Anordnung der Abförderbahn 144 im Zusammenwirken mit weiteren Komponenten der Spiralförderschnecke 130 in der Kammer 110 wird andererseits auch auf wirksame Weise in dem Druckmaterial DM eingeschlossenes Gas G daran gehindert, in den Auslassbereich 142 zu gelangen. Vielmehr wird es mit dem in die Abförderbahn 144 geleiteten Druckmaterial DM wieder aus der Spiralförderschnecke 130 abgeführt. Da die Dachfläche der Abförderbahn 144 einen größeren Abstand zu der Fläche 116 hat als die Dachfläche der Förderbahn 136, kann in dem Druckmaterial DM eingeschlossenes Gas G auf seinem Weg nach innen von der Förderbahn 136 in den Auslassbereich 142 in die Abförderbahn 144 aufsteigen. Dort wird das eingeschlossene Gas G von dem Gegenstrom zu den Öffnungen 170 in der Dachfläche der Abförderbahn 144 oder zu deren Ende im Einlassbereich der Förderbahn 136 transportiert. So kann das eingeschlossene Gas G ein kontrolliertes Austreten von Druckmaterial DM durch die Austrittsöffnung 120 nicht beeinträchtigen. Vielmehr bewirkt die Ausgestaltung der Spiralförderschnecke 130, dass diese durch das wirksame Ableiten von Gaseinschlüssen möglichst wenig ihrer Förderleistung verliert, und insbesondere auch dass diese Gaseinschlüsse G im Druckmaterial DM nicht bis zu der Austrittsöffnung 120 gelangen und das Druckerzeugnis DE verunreinigen.

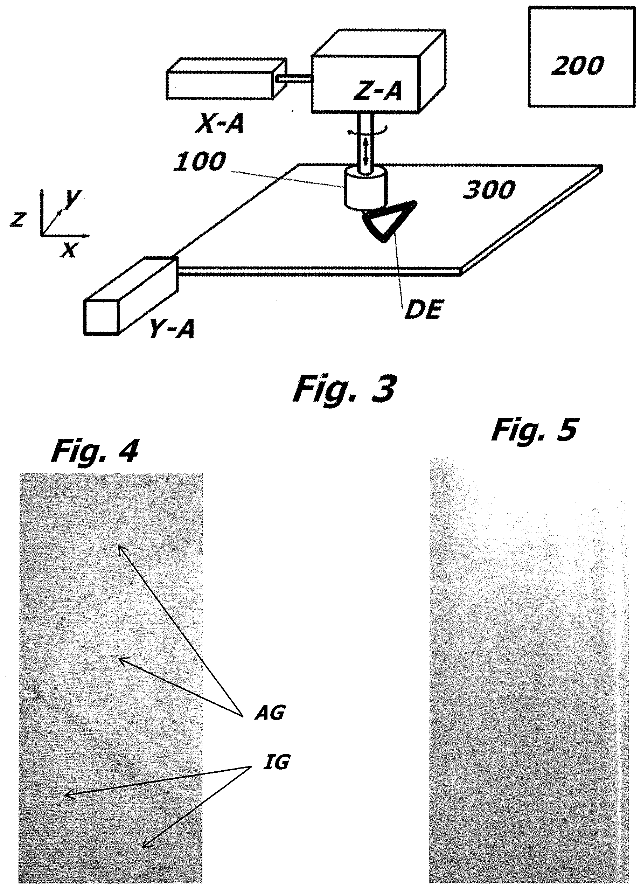

Ein 3D-Drucker mit einem hier vorgestellten 3D-Druckerkopf 100 bewegt diesen, wie in Fig. 3 veranschaulicht, relativ zu einer ebenen Aufnahme 300 für ein Druckerzeugnis DE entlang wenigstens einer geometrischen Achse x, y, z. Dazu hat der 3D-Drucker eine Steuerung 200, die mittels jeweiliger Achsantriebe X-A, Y-A, Z-A den 3D-Druckerkopf 100 und die Aufnahme 300 relativ zueinander bewegt und auch den Antrieb 132 für die Spiralförderschnecke 130 in der Kammer 100 betätigt, um Druckmaterial aus der Austrittsöffnung 120 kontrolliert auf die Aufnahme 300 auszubringen. So ist ein 3D-Druckerzeugnis erhältlich mittels des 3D-Druckers mit dem 3D-Druckerkopf und in der hier erläuterten Vorgehensweise.

Ein solches, mittels eines 3D-Druckers aufweisend einen 3D-Druckerkopf mit einem oder mehreren vorhergehenden Vorrichtungsaspekte und/oder mittels eines Verfahrens mit einem oder mehreren der vorhergehenden Verfahrensaspekte hergestelltes Druckerzeugnis oder Bauteil ist von einem herkömmlich erzeugten Druckerzeugnis oder Bauteil klar unterscheidbar, wie dies in den Fig. 4 und 5 deutlich erkennbar ist. In beiden Proben ist ein Schichtaufbau aus Polycarbonat zu sehen, wobei im herkömmlich hergestellten Druckerzeugnis (Fig. 4) eine Vielzahl außenliegender Gaseinschlüsse AG und innenliegender Gaseinschlüsse IG vorhanden sind. Dies ist bei dem Druckerzeugnis (Fig. 5) praktisch nicht der Fall, welches mittels eines 3D-Druckers aufweisend einen 3D-Druckerkopf mit einem oder mehreren vorhergehenden Vorrichtungsaspekte und/oder mittels eines Verfahrens mit einem oder mehreren der vorhergehenden Verfahrensaspekte erzeugt wurde. Das Verringern / Verhindern von Gasaustrag aus der Kammer-Austrittsöffnung hat zur Folge, dass das hier erhaltene Druckerzeugnis (Fig. 5) erheblich weniger oder praktisch gar keine (relevanten) Gaseinschlüsse aufweist.

Die vorangehend beschriebenen Varianten des Verfahrens und der Vorrichtung dienen lediglich dem besseren Verständnis der Struktur, der Funktionsweise und der Eigenschaften der vorgestellten Lösung; sie schränken die Offenbarung nicht etwa auf die Ausführungsbeispiele ein. Die Fig. sind schematisch, wobei wesentliche Eigenschaften und Effekte zum Teil deutlich vergrößert dargestellt sind, um die Funktionen, Wirkprinzipien, technischen Ausgestaltungen und Merkmale zu verdeutlichen.

### Bezugszeichen

3D-Druckerkopf 100
topfförmige Kammer 110
Deckel 112
Einlass 114
flüssiges oder festes Druckmaterial DM
Fläche 116
Austrittsöffnung 120
Eingang 128
Spiralförderschnecke 130
Antrieb 132
Stirnseite 134
Förderbahn 136
Heizwendel 138
Einlassbereich 140
Auslassbereich 142
Abförderbahn 144
radial innere Randzone 146
Wand 150
außen liegendes Ende 152 der Wand 150
innen liegendes Ende 154 der Wand 150
Ringwand 148
Durchbruch 160
Bund 164
freier Rand 166
Dachfläche 168 der Förderbahn 136
Dachfläche 170 der Abförderbahn 144
Feder 190
Steuerung 200
Achsantriebe X-A, Y-A, Z-A
Aufnahme 300
Druckmaterial DM
Gaseinschlüsse G
Mittellängsachse M der Spiralförderschnecke 130
Drehrichtung DR der Spiralförderschnecke 130
Zentrum Z der Spiralförderschnecke 130
Pfeile P1 und P2
Druckerzeugnis DE
außenliegender Gaseinschluss AG
innenliegender Gaseinschluss IG

## Patentansprüche

1. Ein 3D-Druckerkopf (100), umfassend
- eine Kammer (110), die dazu eingerichtet ist, durch einen Einlass (114) flüssiges oder festes Druckmaterial (DM) zu erhalten, wobei
- die Kammer (110) an einer Fläche (116) eine Austrittsöffnung (120) aufweist, und
- der Kammer (110) eine Spiralförderschnecke (130) zugeordnet ist, die dazu eingerichtet ist, aus dem Einlass in die Kammer gelangendes Druckmaterial der Austrittsöffnung zuzuführen, indem die Spiralförderschnecke (130) oder die Kammer (110) mit einem Antrieb (132) zu koppeln ist, der dazu eingerichtet ist, die Spiralförderschnecke oder die Kammer so zu drehen, dass sich die Spiralförderschnecke in einem Abstand von der Fläche der Kammer und relativ zu dieser zu dreht, **dadurch gekennzeichnet, dass**
- die Spiralförderschnecke
-- wenigstens eine Förderbahn (136) aufweist, die dazu eingerichtet ist, Druckmaterial (DM) zwischen einem radial außen liegenden Einlassbereich (140) und einem radial innen liegenden Auslassbereich (142) zu diesem hin zu fördern, und
-- wenigstens eine Abförderbahn (144) aufweist, die derart angeordnet und dazu eingerichtet ist, Druckmaterial (DM) mit darin befindlichem Gas (G) zumindest von einem Abschnitt einer radial inneren Randzone (146) der Förderbahn (136) wegzufördern.

2. Der 3D-Druckerkopf nach Anspruch 1, wobei die Spiralförderschnecke und die Kammer dazu eingerichtet sind, relativ zueinander so rotiert zu werden, dass sie in dem Druckmaterial befindliche Gaseinschlüsse zumindest von der radial inneren Randzone der Förderbahn durch die Abförderbahn wegfördert, bevor solche Gaseinschlüsse in das Innere des Auslassbereiches gelangen, und so die Spiralförderschnecke überwiegend annähernd gasfreies Druckmaterial in das Innere des Auslassbereiches und von dort zu der Kammer-Austrittsöffnung fördert.

3. Der 3D-Druckerkopf nach Anspruch 1 oder 2, wobei
- die Spiralförderschnecke eine annähernd kreisrunde, der Fläche der Kammer mit der Austrittsöffnung zugewandte Stirnseite aufweist, und/oder
- die Stirnseite ein Zentrum aufweist, das in etwa mit der Austrittsöffnung in der Fläche der Kammer fluchtet, und/oder
- die Stirnseite der Spiralförderschnecke zu der Fläche der Kammer etwa parallel angeordnet und so orientiert ist, dass der radial innen liegende Auslassbereich der Spiralförderschnecke im Abstand zu der Austrittsöffnung und nahe dieser rotiert.

4. Der 3D-Druckerkopf nach einem der vorhergehenden Ansprüche, wobei
- ein radial außen liegender Einlassbereich in die Förderbahn durch einen seitlichen, in einer stirnseitigen Draufsicht etwa kreissektorförmigen Ausschnitt gebildet ist, und/oder
- auf der von dem Einlass der Förderbahn abliegenden Seite des Einlassbereiches die Spiralförderschnecke eine die Förderbahn und/oder die Abförderbahn begrenzende endseitig Wand aufweist, deren außen liegendes Ende ihrem innen liegenden Ende in einer stirnseitigen Draufsicht in Drehrichtung der Spiralförderschnecke voran eilt, und/oder
- diese Wand in der Förderbahn geführtes Druckmaterial zu dem im Zentrum der Spiralförderschnecke befindlichen Auslassbereich hinlenkt, und/oder
- sich diese Wand so weit erstreckt, dass sie die Abförderbahn nach innen überragt, und/oder
- diese Wand das Druckmaterial auch quer zu der Abförderbahn unter dieser hindurch und/oder in diese hinein lenkt.

5. Der 3D-Druckerkopf nach einem der vorhergehenden Ansprüche, wobei
- der Auslassbereich eine zumindest annähernd koaxial zur Mittellängsachse der Spiralförderschnecke ausgerichtete, ihn umgebende Ringwand aufweist, wobei
- die Ringwand einen Durchbruch an einer Stelle aufweist, an der die Wand von der Förderbahn an den Auslassbereich hinreicht, und/oder
- der Durchbruch dazu eingerichtet ist, Druckmaterial von der Förderbahn, die Abförderbahn passierend, durch den Durchbruch zu dem im Zentrum der Spiralförderschnecke befindlichen Auslassbereich gelangen zu lassen.

6. Der 3D-Druckerkopf nach einem der vorhergehenden Ansprüche, wobei
- die der Austrittsöffnung zugewandte Stirnseite der Spiralförderschnecke an ihrem Umfang einen zumindest annähernd koaxial zur Mittellängsachse ausgerichteten Bund aufweist, der die Förderbahn radial nach außen begrenzt, und/oder
- der Bund einen freien, unteren Rand aufweist, welcher die Stirnseite der Spiralförderschnecke hin zu der Fläche der Kammer mit der Austrittsöffnung begrenzt, und/oder
- die Förderbahn eine sich zumindest teilweise um die Mittellängsachse herum erstreckende Dachfläche aufweist, und/oder
- die Dachfläche der Förderbahn diese auf ihrer von der Fläche der Kammer abliegenden Seite begrenzt, und/oder
- die Förderbahn zur Fläche der Kammer hin zumindest teilweise offen ist, und/oder
- die Dachfläche der Förderbahn zur Mittellängsachse der Spiralförderschnecke in einem Winkel von 90° plus/minus bis zu 25° orientiert ist.

7. Der 3D-Druckerkopf nach einem der vorhergehenden Ansprüche, wobei
- die Abförderbahn eine Dachfläche mit einem größeren Abstand von der Stirnseite der Spiralförderschnecke als die Dachfläche der Förderbahn aufweist, und/oder
- zumindest ein Abschnitt der Abförderbahn radial weiter innen liegend angeordnet ist als ein Abschnitt der Förderbahn, und/oder
- die Abförderbahn einerseits und der Auslassbereich andererseits so dimensioniert und gestaltet sind, dass die Abförderbahn dem Druckmaterial einen ersten Strömungswiderstand bietet, und der Auslassbereich dem Druckmaterial einen zweiten Strömungswiderstand bietet, wobei der erste Strömungswiderstand geringer ist als der zweite Strömungswiderstand, und wobei der zweite Strömungswiderstand des Auslassbereichs so klein bemessen ist, dass bei einer relativen Rotation der Spiralförderschnecke zu der Kammer ausreichend Druckmaterial in den Auslassbereich hin zu der Austrittsöffnung strömt.

8. Der 3D-Druckerkopf nach einem der vorhergehenden Ansprüche, wobei
- zumindest ein Abschnitt der Förderbahn die Abförderbahn zumindest teilweise in Umfangsrichtung der Spiralförderschnecke umgibt, und/oder
- die Abförderbahn den im Zentrum der Spiralförderschnecke befindlichen Auslassbereich umgibt, und/oder
- die Abförderbahn bis zum Einlass der Förderbahn oder darüber hinausreicht, um Druckmaterial und eingeschlossenes Gas aus der Abförderbahn weg zu fördern, und/oder
- die Abförderbahn entlang ihrer Erstreckung in ihrer Dachfläche zumindest eine Öffnung aufweist, die dazu eingerichtet ist, Druckmaterial und eingeschlossenes Gas aus der Abförderbahn entweichen zu lassen.

9. Ein 3D-Drucker, umfassend einen 3D-Druckerkopf nach einem der vorhergehenden Ansprüche, der mit relativ zu einer Aufnahme für ein Druckerzeugnis entlang wenigstens einer geometrischen Achse zu bewegen ist, wobei dem 3D-Drucker eine Steuerung zugeordnet ist, die dazu eingerichtet ist, mittels wenigstens einem Achsantrieb den 3D-Druckerkopf relativ zu der Aufnahme zu bewegen und/oder einem Antrieb für die Spiralförderschnecke relativ zu der Kammer um Druckmaterial aus der Austrittsöffnung kontrolliert auf die Aufnahme auszubringen.

10. Ein Verfahren zum Betreiben eines 3D-Druckers mit einem 3D-Druckerkopf nach einem der vorhergehenden Ansprüche, mit folgenden Schritten:
- Bereitstellen einer Kammer, die an einer Fläche eine Austrittsöffnung aufweist,
- Zuordnen einer Spiralförderschnecke zu der Kammer,
- Versehen der Spiralförderschnecke mit wenigstens einer Förderbahn und wenigstens einer Abförderbahn,
- Beschicken einer Kammer mit flüssigem oder festem Druckmaterial,
- Hervorrufen einer relativen Rotation der Spiralförderschnecke zu der Kammer um eine Mittellängsachse der Spiralförderschnecke , wobei sich eine Stirnseite der Spiralförderschnecke in einem Abstand von der Fläche befindet,
- Fördern von Druckmaterial zwischen einem radial außen liegenden Einlassbereich und einem radial innen liegenden Auslassbereich mittels der Förderbahn, und
- Fördern von Druckmaterial mit darin befindlichem Gas weg von zumindest von einem Abschnitt einer radial äußeren Randzone des Auslassbereiches.

11. Das Verfahren nach Anspruch 10, wobei die relative Rotation der Spiralförderschnecke zu der Kammer so hervorgerufen wird , dass sie in dem Druckmaterial befindliche Gaseinschlüsse zumindest von der radial äußeren Randzone des Auslassbereiches in die Abförderbahn wegfördert, bevor solche Gaseinschlüsse in das Innere des Auslassbereiches gelangen, und so die Spiralförderschnecke überwiegend annähernd gasfreies Druckmaterial in das Innere des Auslassbereiches und von dort zu der Kammer-Austrittsöffnung fördert.

## Claims

1. A 3D printer head (100) comprising
- a chamber (110) configured to receive liquid or solid printing material (DM) through an inlet (114), wherein
- the chamber (110) has an exit opening (120) on a surface (116), and
- a spiral feed screw (130) is associated with the chamber (110) and configured to feed printing material entering the
chamber from the inlet to the exit opening by coupling the chamber (110) or the chamber (110) to a drive (132), a spiral feed screw (130) is associated with the chamber (110) and is configured to feed printing material entering the chamber from the inlet to the outlet opening by coupling the spiral feed screw (130) or the chamber (110) to a drive (132) which is configured to rotate the spiral feed screw or the chamber so that the spiral feed screw rotates at a distance from and relative to the surface of the chamber, **characterized in that**
- the spiral conveyor screw comprises
-- at least one conveyor path (136) arranged to convey printing material (DM) between a radially outer inlet region (140) and a radially inner outlet region (142) towards the latter, and
-- at least one discharge path (144) arranged and configured to convey printing material (DM) with gas (G) therein away from at least a portion of a radially inner peripheral zone (146) of the conveyor path (136).

2. The 3D printer head of claim 1, wherein the spiral feed screw and the chamber are configured to be rotated relative to each other so as to convey gas inclusions present in the printing material away from at least the radially inner peripheral zone of the feed path through the discharge path before such gas inclusions enter the interior of the outlet region, and so that the spiral feed screw conveys predominantly approximately gas-free printing material into the interior of the outlet region and thence to the chamber outlet opening.

3. The 3D printer head according to claim 1 or 2, wherein
- the spiral feed screw has an approximately circular end face facing the surface of the chamber with the outlet opening, and/or
- the end face has a centre which is approximately aligned with the outlet opening in the surface of the chamber, and/or
- the end face of the spiral conveyor screw is arranged approximately parallel to the surface of the chamber and is oriented in such a way that the radially inner outlet region of the spiral conveyor screw rotates at a distance from and close to the outlet opening.

4. The 3D printer head according to one of the preceding claims, wherein
- a radially outer inlet region into the conveyor path is formed by a lateral cutout which is approximately in the shape of a sector of a circle in a frontal plan view, and/or
- on the side of the inlet region remote from the inlet of the conveyor path, the spiral conveyor screw has an end wall which bounds the conveyor path and/or the discharge path, the outer end of which advances in front of its inner end in a frontal plan view in the direction of rotation of the spiral conveying screw, and/or
- this wall directs printing material guided in the conveying path towards the outlet region located in the centre of the spiral conveying screw, and/or
- this wall extends so far that it overhangs the discharge conveyor track inwards, and/or
- this wall also guides the printing material transversely to the discharge path underneath it and/or into it.

5. The 3D printer head according to any one of the preceding claims, wherein
- the outlet region has an annular wall aligned at least approximately coaxially with the central longitudinal axis of the spiral conveyor screw and surrounding it, wherein
- the annular wall has an aperture at a point where the wall extends from the conveyor path to the outlet region, and/or
- the aperture is arranged to allow printing material from the conveyor path, passing the discharge path, to pass through the aperture to the outlet area located in the centre of the spiral conveyor screw.

6. The 3D printer head according to any one of the preceding claims, wherein
- the end face of the spiral conveyor screw facing the outlet opening has on its circumference a collar which is aligned at least approximately coaxially with the central longitudinal axis and which delimits the conveyor path radially outwards, and/or
- the collar has a free, lower edge which delimits the end face of the spiral conveyor screw towards the surface of the chamber with the outlet opening, and/or
- the conveyor track has a roof surface extending at least partially around the central longitudinal axis, and/or
- the roof surface of the conveyor track delimits it on its side remote from the surface of the chamber, and/or
- the conveyor track is at least partially open towards the surface of the chamber, and/or
- the roof surface of the conveyor track is oriented at an angle of 90° plus/minus up to 25° to the central longitudinal axis of the spiral conveyor screw.

7. The 3D printer head according to any one of the preceding claims, wherein
- the discharge conveyor has a roof surface with a greater distance from the end face of the spiral conveyor screw than the roof surface of the conveyor, and/or
- at least one section of the discharge conveyor track is arranged radially further inwards than a section of the conveyor track, and/or
- the discharge path, on the one hand, and the outlet region, on the other hand, are dimensioned and configured such that the discharge path offers a first flow resistance to the printing material, and the outlet region offers a second flow resistance to the printing material, wherein the first flow resistance is lower than the second flow resistance, and wherein the second flow resistance of the outlet region is dimensioned so small that sufficient printing material flows into the outlet region towards the outlet opening during a relative rotation of the spiral conveyor screw to the chamber.

8. The 3D printer head according to any one of the preceding claims, wherein
- at least one section of the conveying path at least partially surrounds the discharge path in the circumferential direction of the spiral conveying screw, and/or
- the discharge path surrounds
the outlet area located in the centre of the spiral conveying screw, and/or - the discharge path extends up to the inlet of the conveying path or beyond in order to convey printing material and trapped gas away from the discharge path, and/or
- the discharge path has at least one opening along its extension in its roof surface, which is arranged to allow printing material and trapped gas to escape from the discharge path.

9. A 3D printer comprising a 3D printer head according to any one of the preceding claims movable relative to a receptacle for a printed product along at least one geometric axis, the 3D printer having associated therewith a controller arranged to move, by means of at least one axis drive, the 3D printer head relative to the receptacle and/or a drive for the spiral feed screw relative to the chamber to dispense printing material from the exit aperture onto the receptacle in a controlled manner.

10. A method of operating a 3D printer having a 3D printer head according to any one of the preceding claims, comprising the steps of:
- providing a chamber having an exit opening on a surface,
- associating a spiral conveyor screw with the chamber,
- providing the spiral conveyor screw with at least one conveying path and at least one discharge path,
- charging a chamber with liquid or solid printing material,
- causing the spiral conveyor screw to rotate relative to the chamber about a central longitudinal axis of the spiral conveyor screw, wherein an end face of the spiral distance from the surface,
- conveying printing material between a radially outer inlet region and a radially inner outlet region by means of the conveying path, and
- conveying printing material with gas therein away from at least a portion of a radially outer edge zone of the outlet region.

11. The method of claim 10, wherein relative rotation of the spiral screw conveyor to the chamber is caused to convey gas inclusions in the printing material away from at least the radially outer periphery of the outlet region into the discharge path before such gas inclusions enter the interior of the outlet region, the spiral screw conveyor thus conveying predominantly approximately gas-free printing material into the interior of the outlet region and thence to the chamber discharge opening.

## Revendications

1. Tête d'imprimante 3D (100) comprenant
- une chambre (110) configrée pour recevoir un matériau d'impression liquide ou solide (DM) par une entrée (114), dans laquelle
- la chambre (110) a une ouverture de sortie (120) sur une surface (116), et
- une vis d'alimentation en spirale (130) est associée à la chambre (110) et est configrée pour une vis d'alimentation en spirale (130) est associée à la chambre (110) et est configrée pour alimenter le matériau d'impression entrant dans la chambre depuis l'ouverture d'entrée vers l'ouverture de sortie en couplant la vis d'alimentation en spirale (130) ou la chambre (110) à un entraînement (132) qui est configré pour faire tourner la vis d'alimentation en spirale ou la chambre de sorte que la vis d'alimentation en spirale tourne à une distance de et par rapport à la surface de la chambre, **caractérisé en ce que** la vis d'alimentation en spirale (130) ou la chambre (110) est couplée à un entraînement (132) qui est configré pour faire tourner la vis d'alimentation en spirale ou la chambre de sorte que la vis d'alimentation en spirale tourne par rapport à la surface de la chambre.
- la vis transporteuse en spirale
comprend -- au moins un chemin de transport (136) agencé pour transporter le matériau d'impression (DM) entre une région d'entrée radialement extérieure (140) et une région de sortie radialement intérieure (142) vers cette dernière, et
-- au moins un chemin de décharge (144) agencé et disposé pour transporter le matériau d'impression (DM) avec du gaz (G) dans celui-ci à l'écart d'au moins une partie d'une zone périphérique radialement intérieure (146) du chemin de transport (136).

2. Tête d'imprimante 3D selon la revendication 1, dans laquelle la vis d'alimentation en spirale et la chambre sont configrées pour être tournées l'une par rapport à l'autre de manière à transporter les inclusions de gaz présentes dans le matériau d'impression à l'écart d'au moins la zone périphérique radialement interne du chemin d'alimentation à travers le chemin de décharge avant que de telles inclusions de gaz ne pénètrent à l'intérieur de la région de sortie, et ainsi la vis d'alimentation en spirale transporte un matériau d'impression de manière prédominante approximativement exempt de gaz à l'intérieur de la région de sortie et de là vers l'ouverture de décharge de la chambre.

3. Tête d'imprimante 3D selon la revendication 1 ou 2, dans laquelle
- la vis d'alimentation en spirale a une face d'extrémité approximativement circulaire faisant face à la surface de la chambre avec l'ouverture de sortie, et/ou
- la face d'extrémité a un centre qui est approximativement aligné avec l'ouverture de sortie dans la surface de la chambre, et/ou
- la face frontale de la vis sans fin est disposée approximativement parallèlement à la surface de la chambre et est orientée de telle sorte que la zone de sortie radialement intérieure de la vis sans fin tourne à distance de l'ouverture de sortie et à proximité de celle-ci.

4. Tête d'imprimante 3D selon l'une des revendications précédentes, dans laquelle
- une zone d'entrée radialement extérieure dans le chemin de transport est formée par une découpe latérale qui a approximativement la forme d'un secteur de cercle dans une vue en plan frontale, et/ou
- sur le côté de la zone d'entrée éloigné de l'entrée du chemin de transport, la vis sans fin de transport présente une paroi d'extrémité qui délimite le chemin de transport et/ou le chemin d'évacuation, dont l'extrémité extérieure avance devant son extrémité intérieure dans une vue en plan frontale dans le sens de rotation de la vis sans fin de transport, et/ou
- cette paroi guide le matériau sous pression guidé dans le trajet de transport vers la zone de sortie située au centre de la vis sans fin de transport, et/ou
- sur le côté de la zone d'entrée éloigné de l'entrée du trajet de transport, la vis sans fin de transport présente une paroi frontale qui délimite le trajet de transport et/ou le trajet de sortie.
- cette paroi s'étend dans une mesure telle qu'elle fait saillie vers l'intérieur au-delà de la voie du convoyeur de décharge, et/ou
- cette paroi guide également le matériau d'impression transversalement à la trajectoire de décharge en dessous d'elle et/ou dans elle.

5. La tête d'imprimante 3D selon l'une quelconque des revendications précédentes, dans laquelle
- la région de sortie comprend une paroi annulaire alignée au moins approximativement coaxialement avec l'axe longitudinal central de la vis de transport en spirale et l'entourant, dans laquelle
- la paroi annulaire comprend une ouverture à un emplacement où la paroi s'étend du chemin de transport à la région de sortie, et/ou
- l'ouverture est agencée pour permettre au matériau sous pression provenant du chemin de convoyage, passant par le chemin de décharge, de passer à travers l'ouverture vers la région de sortie située au centre de la vis de convoyage en spirale.

6. La tête d'imprimante 3D selon l'une quelconque des revendications précédentes, dans laquelle.
- la face frontale de la vis sans fin tournée vers l'ouverture de sortie présente sur sa périphérie une collerette qui est alignée au moins approximativement coaxialement avec l'axe longitudinal central et qui délimite le trajet du convoyeur radialement vers l'extérieur, et/ou
- le collier a un bord inférieur libre qui limite la face d'extrémité de la vis transporteuse à spirale vers la surface de la chambre avec l'ouverture de sortie, et/ou
- la piste du convoyeur a une surface de toit s'étendant au moins partiellement autour de l'axe longitudinal central, et/ou
- la surface du toit de la voie du convoyeur la délimite sur son côté éloigné de la surface de la chambre, et/ou
- la surface du toit de la piste du convoyeur est orientée selon un angle de 90° plus/moins jusqu'à 25° par rapport à l'axe longitudinal central de la vis sans fin.

7. La tête d'imprimante 3D selon l'une quelconque des revendications précédentes, dans laquelle.
- le convoyeur de décharge a une surface de toit avec une distance plus grande de la face d'extrémité de la vis du convoyeur en spirale que la surface de toit du convoyeur, et/ou
- au moins une section de la voie du convoyeur de décharge est disposée radialement plus à l'intérieur qu'une section de la voie du convoyeur, et/ou
- le chemin de décharge, d'une part, et la région de sortie, d'autre part, sont dimensionnés et configurés de telle sorte que le chemin de décharge offre une première résistance à l'écoulement au matériau sous pression, et la région de sortie offre une seconde résistance à l'écoulement au matériau sous pression, dans lequel la première résistance à l'écoulement est inférieure à la seconde résistance à l'écoulement, et dans lequel la seconde résistance à l'écoulement de la région de sortie est dimensionnée si petite qu'une quantité suffisante de matériau sous pression s'écoule dans la région de sortie vers l'ouverture de sortie lors de la rotation relative de la vis de convoyeur à spirale par rapport à la chambre.

8. La tête d'imprimante 3D selon l'une quelconque des revendications précédentes, dans laquelle:
- au moins une section du chemin de transport entoure au moins partiellement le chemin de décharge dans la direction circonférentielle de la vis de transport en spirale, et/ou
- le chemin de décharge entoure la région de sortie située au centre de la vis de transport en spirale, et/ou - le chemin de décharge s'étend jusqu'à l'entrée du chemin de transport ou au-delà de celle-ci afin de transporter le matériau sous pression et le gaz enfermé hors du chemin de décharge, et/ou
- le chemin de décharge a au moins une ouverture le long de son extension dans sa surface supérieure, laquelle ouverture est agencée pour permettre au matériau sous pression et au gaz enfermé de s'échapper du chemin de décharge.

9. Imprimante 3D comprenant une tête d'impression 3D selon l'une quelconque des revendications précédentes, qui est mobile par rapport à un réceptacle pour un produit imprimé le long d'au moins un axe géométrique, dans laquelle l'imprimante 3D est associée à un contrôleur qui est agencé pour déplacer la tête d'impression 3D par rapport au réceptacle au moyen d'au moins un entraînement d'axe et/ou un entraînement de la vis d'alimentation en spirale par rapport à la chambre afin de décharger le matériau d'impression de l'ouverture de sortie sur le réceptacle de manière contrôlée.

10. Procédé de fonctionnement d'une imprimante 3D comportant une tête d'impression 3D selon l'une quelconque des revendications précédentes, comprenant les étapes suivantes:
- fournir une chambre ayant une ouverture de sortie sur une surface,
- associer une vis de transport en spirale à la chambre,
- fournir à la vis de transport en spirale au moins un chemin de transport et au moins un chemin de décharge,
- charger une chambre avec un matériau sous pression liquide ou solide,
- amener la vis de transport en spirale à tourner par rapport à la chambre autour d'un axe longitudinal central de la vis de transport en spirale, dans lequel une face d'extrémité de la vis de distance de la surface,
- transporter le matériau d'impression entre une région d'entrée radialement extérieure et une région de sortie radialement intérieure au moyen du chemin de transport, et
- transporter le matériau d'impression avec du gaz à l'intérieur en l'éloignant d'au moins une partie d'une zone périphérique radialement extérieure de la région de sortie.

11. Procédé de la revendication 10, dans lequel la rotation relative du transporteur à vis sans fin par rapport à la chambre est provoquée pour transporter des inclusions de gaz dans le matériau imprimé à l'écart d'au moins la périphérie radialement extérieure de la région de sortie dans le trajet de décharge avant que ces inclusions de gaz ne pénètrent à l'intérieur de la région de sortie, le transporteur à vis sans fin transportant ainsi un matériau imprimé essentiellement sensiblement exempt de gaz à l'intérieur de la région de sortie et de là vers l'ouverture de décharge de la chambre.
